(19) Europäisches Patentamt
European Patent Office
Office européen des brevets

(11) **EP 4 691 761 A1**

(12) **EUROPEAN PATENT APPLICATION**
published in accordance with Art. 153(4) EPC

(43) Date of publication:
**11.02.2026 Bulletin 2026/07**

(21) Application number: **24780792.8**

(22) Date of filing: **29.03.2024**

(51) International Patent Classification (IPC):
**B32B 15/08** (2006.01)     **B32B 27/32** (2006.01)
**C08F 8/30** (2006.01)      **C09J 123/26** (2006.01)

(52) Cooperative Patent Classification (CPC):
**B32B 15/08; B32B 27/32; C08F 8/30; C09J 123/26**

(86) International application number:
**PCT/JP2024/013016**

(87) International publication number:
**WO 2024/204697 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023056667**

(71) Applicant: **Mitsui Chemicals, Inc.
Tokyo 104-0028 (JP)**

(72) Inventors:
• **MAKIGUCHI Wataru**
 **Ichihara-shi, Chiba 299-0108 (JP)**
• **YAMASAKI Takashi**
 **Sodegaura-shi, Chiba 299-0265 (JP)**
• **SHIGA Ryohei**
 **Sodegaura-shi, Chiba 299-0265 (JP)**
• **OGAWA Yoshiyuki**
 **Ichihara-shi, Chiba 299-0108 (JP)**

(74) Representative: **Hoffmann Eitle
Patent- und Rechtsanwälte PartmbB
Arabellastraße 30
81925 München (DE)**

(54) **METAL RESIN COMPOSITE BODY AND METHOD FOR PRODUCING SAME**

(57)     Provided is a metal-resin composite having sufficient adhesive strength between a metal material and a polymer composition.

The present invention relates to a metal-resin composite including a layer (AL) composed of a metal material (A), and a layer (BL) composed of a polymer composition (B) that satisfies the following requirements (i) and (ii), and a method for producing the metal-resin composite.

(i) A carbodiimide-modified polyolefin formed by reaction of a polyolefin (a) having a group reactive with a carbodiimide group and a carbodiimide group-containing compound (b) is contained.

(ii) Carbodiimide groups are contained in an amount of 0.1 to 50 mmol per 100 g of the polymer composition (B).

EP 4 691 761 A1

**Description**

Technical Field

The present invention relates to a metal-resin composite excellent in adhesive strength, particularly adhesive strength at high temperature, between a metal material and a polymer composition, and a method for producing the metal-resin composite.

Background Art

Composites of metal and a thermoplastic resin such as a polyolefin resin typified by polyethylene and polypropylene are used in various fields such as those of home electric appliances, machine parts, electric parts and automobile parts.

In general, polyolefin resins do not contain a polar group in the molecule, and thus have poor adhesive strength with metal. For this reason, a method has been widely used in which an unsaturated carboxylic acid such as maleic acid is grafted to a polyolefin to improve affinity for polar resins as disclosed in Patent Literature 1.

Citation List

Patent Literature

Patent Literature 1: JP50-4144A

Summary of Invention

Technical Problem

However, use in various fields requires sufficient adhesive strength in a wide temperature range, and conventional adhesion techniques have a problem that adhesive strength particularly at high temperature decreases.

Accordingly, an object of the present invention is to provide a metal-resin composite having sufficient adhesive strength between a metal material and a polymer composition in a wide temperature range.

Solution to Problem

The present invention relates to the following [1] to [14].

[1] A metal-resin composite comprising a layer (AL) composed of a metal material (A), and a layer (BL) composed of a polymer composition (B) that satisfies the following requirements (i) and (ii):

(i) a carbodiimide-modified polyolefin formed by reaction of a polyolefin (a) having a group reactive with a carbodiimide group and a carbodiimide group-containing compound (b) is contained; and
(ii) carbodiimide groups are contained in an amount of 0.1 to 50 mmol per 100 g of the polymer composition (B).

[2] The metal-resin composite according to [1], wherein a content of the carbodiimide-modified polyolefin in the polymer composition (B) is 1% by mass to 40% by mass.
[3] The metal-resin composite according to [1] or [2], wherein the polymer composition (B) further contains a high-density polymer (c) having a density of 0.890 $g/cm^3$ or more.
[4] The metal-resin composite according to [3], wherein a content of the high-density polymer (c) in the polymer composition (B) is 60% by mass to 99% by mass.
[5] The metal-resin composite according to any one of [1] to [4], wherein a content of a low-density polymer (d) having a density of less than 0.890 $g/cm^3$, in the polymer composition (B), is 10% by mass or less.
[6] The metal-resin composite according to any one of [1] to [5], wherein a density of the polymer composition (B) is 0.900 $g/cm^3$ or more.
[7] The metal-resin composite according to any one of [1] to [6], wherein the layer (AL) and the layer (BL) are at least partially heat-sealed.
[8] The metal-resin composite according to any one of [1] to [7], wherein the layer (AL) and the layer (BL) are at least partially in contact with each other.
[9] The metal-resin composite according to [8], wherein adhesive strength at 100°C between the layer (AL) and the layer (BL) is higher than the adhesive strength at room temperature.

[10] The metal-resin composite according to [3] or [4], wherein the high-density polymer (c) contains a polymer (c-1) having no polar functional group.

[11] The metal-resin composite according to [3] or [4], wherein the high-density polymer (c) contains a polymer (c-2) having a polar functional group.

[12] The metal-resin composite according to any one of [1] to [11], wherein the number of carbodiimide groups in one molecule of the carbodiimide group-containing compound (b) is 5 or more.

[13] The metal-resin composite according to any one of [1] to [12], wherein the metal material (A) is aluminum.

[14] A method for producing the metal-resin composite according to [7] or [8], comprising the steps of bringing a molten product of a polymer composition (B) into contact with a surface of a layer (AL) composed of a metal material (A), and cooling a molten product of the layer (BL) composed of the polymer composition (B) brought into contact with the surface of the layer (AL) composed of the metal material (A), the polymer composition (B) satisfying the following requirements (i) and (ii):

(i) a carbodiimide-modified polyolefin formed by reaction of a polyolefin (a) having a group reactive with a carbodiimide group and a carbodiimide group-containing compound (b) is contained; and

(ii) carbodiimide groups are contained in an amount of 0.1 to 50 mmol per 100 g of the polymer composition (B).

Advantageous Effects of Invention

According to the present invention, by using a specific polymer composition containing a carbodiimide group, sufficient adhesive strength with a metal material can be obtained, and a metal-resin composite having sufficient adhesive strength between a metal material and a polymer composition in a wide temperature range can be provided.

Description of Embodiments

Hereafter, the present invention will be described in more detail.

In the present disclosure, a numerical range expressed with "to" means a range including numerical values placed before and after "to" as a lower limit value and an upper limit value, respectively.

The upper limit value or the lower limit value of a numerical range, among numerical ranges that are serially described in the present disclosure, may be replaced by the upper limit value or the lower limit value of another of the serially described numerical ranges. The upper limit value or the lower limit value of a numerical range, among numerical ranges described in the present disclosure, may be replaced by a value shown in Example.

In the present disclosure, the amount of each component means, when there are a plurality of substances corresponding to the component in the composition, the total amount of the substances present in the composition, unless otherwise specified.

(Metal-resin composite)

A metal-resin composite of the present invention comprises a layer (AL) composed of a metal material (A), and a layer (BL) composed of a polymer composition (B) described later. In the metal-resin composite of the present invention, it is preferred that the layer (AL) and the layer (BL) be at least partially heat-sealed. In the metal-resin composite of the present invention, it is preferred that the layer (AL) and the layer (BL) be at least partially in contact with each other.

Metal-resin composites may be deformed in a high-temperature environment (for example, 100°C) for easily processing the metal, and may be required to exhibit adhesive strength that is high enough to prevent sudden peeling during the deformation. On the other hand, metal-resin composites are extensively recycled, and may be required to have adhesive strength which ensures that at around room temperature, the metal and the resin are easily peeled while the adhesive strength is maintained. That is, metal-resin composites may be required to have higher adhesive strength at high temperature of, for example, 100°C than the adhesive strength at room temperature. A metal-resin composite according to an embodiment of the present invention not only is excellent in adhesive strength, but also allows the metal and the resin to be relatively easily peeled at room temperature, and can exhibit higher adhesive strength at high temperature of, for example, 100°C than the adhesive strength at room temperature.

<Metal material (A)>

The metal material (A) forming the metal-resin composite is not limited as long as it is a material made from metal. For example, alloys and oxides of any of various metals such as iron, nickel, chromium, cobalt, gold, silver, copper, tin, lead and aluminum can be used. Iron and aluminum are preferred because they exhibit better adhesiveness to the layer (BL) composed of the polymer composition (B). Aluminum is preferred because it exhibits particularly good adhesiveness to the layer (BL) composed of the polymer composition (B).

The shape of the metal material (A) is not limited, and may vary depending on a use purpose of the metal-resin composite. A surface of the metal material (A) according to the present invention may be corona-treated or ozone-treated.

<Polymer composition (B)>

The polymer composition (B) forming the layer (BL) forming the metal-resin composite of the present invention satisfies the following requirements (i) and (ii).

<Requirement (i)>

The polymer composition (B) according to the present invention contains a carbodiimide-modified polyolefin formed by reaction of a polyolefin (a) having a group reactive with a carbodiimide group and a carbodiimide group-containing compound (b).

The content of the carbodiimide-modified polyolefin in the polymer composition (B) is preferably 1% by mass to 40% by mass, more preferably 3% by mass to 35% by mass, and even more preferably 5% by mass to 30% by mass. When the content of the carbodiimide-modified polyolefin is in the above-described range, the balance between adhesive strength at room temperature and adhesive strength in a high-temperature environment (for example, 100°C) tends to be improved.

The density of the carbodiimide-modified polyolefin (measured according to JIS K7112) is preferably 0.890 to 0.970 g/cm$^3$, more preferably 0.890 to 0.950 g/cm$^3$, and even more preferably 0.890 to 0.940 g/cm$^3$. When the density of the carbodiimide-modified polyolefin is in the above-described range, the balance between adhesive strength at room temperature and adhesive strength in a high-temperature environment (for example, 100°C) tends to be improved. This is presumed to be because components hardly melt in a high-temperature environment.

[Polyolefin (a)]

The polyolefin (a) can be obtained by introducing a compound (m) having a group reactive with a carbodiimide group into a polyolefin. The polyolefins (a) may be used alone, or used in combination of two or more thereof.

Examples of the compound (m) having a group reactive with a carbodiimide group include compounds having active hydrogen that is reactive with a carbodiimide group. Specific examples thereof include compounds having a group derived from, for example, carboxylic acid, amine, alcohol or thiol. Of these, compounds having a group derived from carboxylic acid are preferably used, and particularly preferred are unsaturated carboxylic acids and/or derivatives thereof. In addition to compounds having a group having active hydrogen, compounds having a group that is easily converted into a group having active hydrogen by, for example, water are preferably used. Specific examples thereof include compounds having an epoxy group or a glycidyl group.

The compounds (m) having a group reactive with a carbodiimide group may be used alone, or two or more thereof may be used.

Examples of the unsaturated carboxylic acids and/or derivatives thereof used as the compound (m) having a group reactive with a carbodiimide group include unsaturated compounds having one or more carboxylic groups, preferably unsaturated compounds having one or more anhydrous carboxylic group. Examples of the unsaturated groups include a vinyl group, a vinylene group, and an unsaturated cyclic hydrocarbon group. The specific compounds include unsaturated carboxylic acids such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hept-2-ene-5,6-dicarboxylic acid, acid anhydrides thereof, and derivatives thereof (for example, acid halides, amides, imides, and esters). Examples of the specific compounds include malonyl chloride, malenylimide, maleic anhydride, itaconic anhydride, citraconic anhydride, tetrahydrophthalic anhydride, bicyclo[2,2,1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, aminoethyl methacrylate and aminopropyl methacrylate.

When an unsaturated carboxylic acid and/or a derivative thereof are used as the compound (m) having a group reactive with a carbodiimide group, the compounds (m) may be used alone, or used in combination of two or more thereof. Of these, maleic anhydride, (meth)acrylic acid, itaconic anhydride, citraconic anhydride, tetrahydrophthalic anhydride, bicyclo[2,2,1]hept-2-ene-5,6,-dicarboxylic anhydride, hydroxyethyl (meth)acrylate, glycidyl methacrylate, and aminopropyl methacrylate are preferred. Dicarboxylic acid anhydrides such as maleic anhydride, itaconic anhydride, citraconic anhydride, tetrahydrophthalic anhydride, and bicyclo[2,2,1]hept-2-ene-5,6,-dicarboxylic anhydride are particularly preferred.

As a method for introducing the compound (m) having a group reactive with a carbodiimide group into a polyolefin, a well-known method can be utilized, and examples thereof include a method in which graft copolymerization of the compound (m) having a group reactive with a carbodiimide group is performed on a polyolefin backbone, and a method in which radical copolymerization of an olefin and the compound (m) having a group reactive with a carbodiimide group is performed.

Hereinafter, the case of graft copolymerization and the case of radical copolymerization will be separately described in detail.

<Graft copolymerization>

The polyolefin (a) having a group reactive with a carbodiimide group can be obtained by performing graft copolymerization of the compound (m) having a group reactive with a carbodiimide group, on a polyolefin backbone.

(Polyolefin backbone)

The polyolefin used as the polyolefin backbone is a polymer containing, as a main component, an aliphatic $\alpha$-olefin, a cyclic olefin or a non-conjugated diene having 2 to 20 carbon atoms, preferably an aliphatic $\alpha$-olefin having 2 to 10 carbon atoms, and more preferably an aliphatic $\alpha$-olefin having 2 to 8 carbon atoms. These $\alpha$-olefins may be used alone, or two or more thereof may be used. In the case of a copolymer, the content of an olefin used as a comonomer is not limited as long as the effects of the present invention are obtained, with the content being typically 50 mol% or less, preferably 40 mol% or less, even more preferably 30 mol% or less. Of this range of polyolefins, crystalline polyolefins such as polyethylene, polypropylene, poly-1-butene, poly-4-methyl-1-pentene and $\alpha$-olefin copolymers thereof are preferred, with polyethylene, polypropylene or propylene/ethylene copolymers being more preferred. These polyolefins may have an isotactic structure or a syndiotactic structure, and any stereoregularity without limitation.

The polyolefin for use in the present invention may be a polymer obtained using only a fossil fuel-derived olefin such as fossil fuel-derived propylene as a raw material, a polymer obtained using only a biomass-derived olefin such as biomass-derived propylene as a raw material, or a polymer obtained using a mixture of a fossil fuel-derived olefin and a biomass-derived olefin as a raw material, or may be a mixture of two or more of these polymers.

Here, the term "fossil fuel", which includes petroleum, coal, natural gas and shale gas, refers to dead animals and plants fossilized by, for example, deposition/pressurization over hundreds of millions of years. The fossil fuel-derived olefin is an olefin obtained from the fossil fuel. Because of the passage of time much longer than 5,730 years, the half-life of $^{14}$C isotope, $^{14}$C is not detected from fossil-derived carbon.

The term "biomass" refers to all recyclable natural raw materials such as those derived from plants and animals including fungi, yeast, algae and bacteria, and residues thereof. The biomass-derived olefin is an olefin obtained from the biomass. The biomass-derived carbon contains a certain amount of $^{14}$C isotope as carbon (at a concentration of about $10^{-12}$).

The density of a polyolefin for use in graft modification (measured according to JIS K7112) is not limited as long as the effects of the present invention are obtained, with the density being typically 0.8 to 1.10 g/cm$^3$, preferably 0.8 to 1.05 g/cm$^3$, and even more preferably 0.8 to 1.00 g/cm$^3$. The melt flow rate (MFR) under a load of 2.16 kg at 230°C as measured according to ASTM D1238 is not limited as long as the effects of the present invention are obtained, with the MFR being typically 0.01 to 500 g/10 min, preferably 0.05 to 200 g/10 min, and even more preferably 0.1 to 100 g/10 min. When the density and MFR are in these ranges, the graft copolymer after modification has an equivalent density and MFR, and thus is easily handled.

The crystallinity degree of the polyolefin for use in graft modification is not limited as long as the effects of the present invention are obtained, with the crystallinity degree being typically 2% or more, preferably 5% or more, and even more preferably 10% or more. When the crystallinity degree is in this range, handling of the graft copolymer after modification is improved.

The number-average molecular weight (Mn) of the polyolefin for use in graft modification is preferably 5,000 to 500,000, and more preferably 10,000 to 100,000 as measured by gel permeation chromatography (GPC). When the number-average molecular weight (Mn) is in this range, handling is improved. The number-average molecular weight of an ethylene-based polyolefin can be determined in terms of polyethylene when the comonomer amount is 10 mol% or less, and in terms of ethylene-propylene (having an assumed ethylene content of 70 mol%) when the comonomer amount is 10 mol% or more.

The above-described polyolefin can be produced by any of known methods, and the polymerization can be performed using, for example, a titanium-based catalyst, a vanadium-based catalyst or a metallocene-based catalyst. The polyolefin for use in graft modification may be in the form of any of a resin and an elastomer, and may have an isotactic structure or a syndiotactic structure, and any stereoregularity without limitation. A commercially available polymer can also be used as it is.

(Graft copolymerization method)

When the polyolefin (a) having a group reactive with a carbodiimide group is obtained by graft copolymerization, graft copolymerization of the compound (m) having a group reactive with a carbodiimide group, and other monomers such as an ethylenically unsaturated monomer if necessary, is performed on the graft backbone polyolefin in the presence of a radical initiator.

The method for grafting the compound (m) having a group reactive with a carbodiimide group to a polyolefin backbone is not limited. A heretofore known graft reaction method such as a solution method or a melt kneading method can be utilized.

The graft amount of the compound (m) having a group reactive with a carbodiimide group is typically 0.05 to 20% by mass, preferably 0.05 to 10% by mass, more preferably 0.05 to 5% by mass, and even more preferably 0.05 to 3% by mass when the amount of the polyolefin (a) is assumed to be 100% by mass. The graft amount of the compound (m) is a net graft amount which is measured after removal of a free compound (m) from the polyolefin (a). The graft amount can be measured by a known technique such as $^{13}$C-NMR or $^1$H-NMR. When a monomer having an acidic functional group, such as an unsaturated carboxylic acid and an anhydride thereof is used as the compound (m), it is also possible to use, for example, an acid number as a rough indication of the amount of functional groups introduced into the polyolefin (a). When maleic anhydride is used, the graft amount can also be determined from an absorption spectrum of a carbonyl group of maleic anhydride detected typically around 1780 to 1790 cm$^{-1}$ using an infrared spectrophotometer.

<Radical copolymerization>

The polyolefin (a) having a group reactive with a carbodiimide group can also be obtained by performing radical copolymerization of an olefin and the compound (m) having a group reactive with a carbodiimide group. As the olefin, an olefin which is identical to that for use in formation of the graft backbone polyolefin can be utilized, and the compound (m) having a group reactive with a carbodiimide group is as described above.

The method for copolymerization of an olefin and the compound (m) having a group reactive with a carbodiimide group is not limited. A heretofore known radical reaction method can be utilized.

(Configuration of polyolefin (a))

The content of residues of the compound (m) having a group reactive with a carbodiimide group in the polyolefin (a) having a group reactive with a carbodiimide group is typically 0.1 to 10% by mass, preferably 0.1 to 8.0% by mass, and more preferably 0.1 to 6.0% by mass. It is preferred that the content of residues of the compound (m) having a group reactive with a carbodiimide group be in the above-described range because the polyolefin (a) can be successfully crosslinked with the carbodiimide group-containing compound (b) to produce the polymer composition (B) .

The density of the polyolefin (a) having a group reactive with a carbodiimide group (measured according to JIS K7112) is preferably 0.890 to 0.970 g/cm$^3$, more preferably 0.890 to 0.950 g/cm$^3$, and even more preferably 0.890 to 0.940 g/cm$^3$. When the density of the polyolefin (a) is in the above-described range, the later-described density of the polymer composition (B) is easily achieved, and the balance between adhesive strength at room temperature and adhesive strength in a high-temperature environment (for example, 100°C) tends to be improved. This is presumed to be because reduction of adhesive strength due to melting of components in a high-temperature environment hardly occurs.

The melt flow rate of the polyolefin (a) having a group reactive with a carbodiimide group (MFR, measured according to ASTM D1238, 230°C, a load of 2.16 kg) is not limited as long as the effects of the present invention are obtained, with the melt flow rate being typically 0.01 to 500 g/10 min, preferably 0.05 to 200 g/10 min, and even more preferably 0.01 to 150 g/10 min.

(Carbodiimide group-containing compound (b))

The carbodiimide group-containing compound (b) is a polycarbodiimide having repeat units each represented by the following general formula (1). The carbodiimide group-containing compounds (b) may be used alone, or two or more thereof may be used.

$$-N=C=N-R^1 \cdots (1)$$

[wherein R$^1$ represents a divalent organic group having 2 to 40 carbon atoms]

The polycarbodiimide can be produced by decarboxylation condensation reaction of an organic diisocyanate such as an aliphatic diisocyanate, an aromatic diisocyanate or an alicyclic diisocyanate in the presence of a condensation catalyst in a solvent-free state or in an inert solvent. For example, diisocyanates such as hexamethylenediisocyanate, 4,4-diphenylmethanediisocyanate, 1,4-phenylenediisocyanate, 2,4-tolylenediisocyanate, xylenediisocyanate, cyclohexane-1,4-diisocyanate, dicyclohexylmethane-4,4'-diisocyanate and isophoronediisocyanate are used alone, or in mixture of two or more thereof. The polymerization degree of the polycarbodiimide can be adjusted by selecting, for example, a catalyst, a reaction temperature and a terminal blocking agent in the decarboxylation condensation reaction. The polymerization degree is typically 2 to 40, and preferably 4 to 20. As the terminal blocking agent, monoisocyanates such as phenyl isocyanate, tolyl isocyanate and naphthyl isocyanate, and active hydrogen compounds such as methanol, ethanol, diethylamine, cyclohexylamine, succinic acid, benzoic acid and ethyl mercaptan can be used. As the condensation catalyst, alcoholates such as titanium, hafnium, zirconium, sodium and calcium, and organophosphorus compounds such as phosphorene oxide can be used.

The number-average molecular weight (Mn) of the carbodiimide group-containing compound (b) in terms of polystyrene, which is determined by gel permeation chromatography (GPC), is not limited as long as the effects of the present invention are obtained, with the number-average molecular weight (Mn) being typically 400 to 500,000, preferably 700 to 10,000, and more preferably 1,000 to 8,000. It is preferred that the number-average molecular weight (Mn) be in this range because the polymer composition (B) is excellent in adhesive strength.

The carbodiimide group-containing compound (b) may contain a monocarbodiimide in a polycarbodiimide, and the compounds can be used alone, or in mixture of two or more thereof.

As the carbodiimide group-containing compound (b), a commercially available carbodiimide group-containing compound can also be used as it is. Examples of the commercially available carbodiimide group-containing compound include CARBODILITE (registered trademark) HMV-8CA and HMV-15CA and CARBODILITE (registered trademark) LA1 manufactured by Nisshinbo Chemical Inc.

The increased number of carbodiimide groups in one molecule of the carbodiimide compound increases the number of sites of reaction with the polyolefin (a), and thus enables adhering to the metal layer more strongly. Accordingly, the number of carbodiimide groups in one molecule of the carbodiimide group-containing compound (b) is preferably 5 or more, and more preferably 10 or more. The upper limit of the number of carbodiimide groups in one molecule of the carbodiimide group-containing compound (b) is not limited as long as the effects of the present invention are obtained, but the increased number of carbodiimide groups in one molecule increases the amount of the carbodiimide compound added, leading to an increase in raw material cost. Thus, the upper limit of the number of carbodiimide groups is typically 30 from the viewpoint of cost.

The carbodiimide group content in the carbodiimide group-containing compound (b) can be measured by, for example, $^{13}$C-NMR, IR or titration, and can be known as a carbodiimide group equivalent. A peak attributed to a carbodiimide group can be observed at 130 to 142 ppm in the case of $^{13}$C-NMR, and at 2130 to 2140 cm$^{-1}$ in the case of IR.

$^{13}$C-NMR measurement is performed in the following manner, for example. That is, 0.35 g of a sample is dissolved in 2.0 ml of hexachlorobutadiene by heating. The solution is filtered through a glass filter (G2), 0.5 ml of deuterated benzene is then added, and the mixture is put in an NMR tube having an inner diameter of 10 mm. $^{13}$C-NMR measurement is performed at 120°C using an NMR measurement apparatus model GX-500 manufactured by JEOL Ltd. The number of scans is 10,000 or more.

(Reaction of polyolefin (a) having group reactive with carbodiimide group and carbodiimide group-containing group (b))

The polyolefin having a carbodiimide group and contained in the polymer composition (B) is obtained by reacting the polyolefin (a) having a group reactive with a carbodiimide group and the carbodiimide group-containing compound (b) preferably at 230°C or higher. Specifically, the polymer composition (B) can be obtained by performing melt kneading as in, for example, melt modification, but the present invention is not limited to this method.

The case of melt kneading is shown below. The method for reacting the polyolefin (a) having a group reactive with a carbodiimide group and the carbodiimide group-containing compound (b) preferably at 230°C or higher is not limited, and examples thereof include a method in which the polyolefin (a) having a group reactive with a carbodiimide group and the carbodiimide group-containing compound (b) are put in, for example, a Henschel mixer, a V-type blender, a tumbler blender or a ribbon blender, kneaded, and then melt-kneaded with, for example, a single screw extruder, a multi-screw extruder, a kneader or a Banbury mixer. Of these, an apparatus having excellent kneading performance, such as a multi-screw extruder, a kneader or a Banbury mixer is preferably used because it is possible to obtain an adhesive polymer composition (B) in which the components are more uniformly dispersed and reacted.

For supplying the polyolefin (a) having a group reactive with a carbodiimide group and the carbodiimide group-containing compound (b), it is possible to use any of a method in which mixing is followed by supply from a hopper, and a method in which some components are supplied from the hopper, and other components are supplied from a supply port provided in an arbitrary portion between the vicinity of the hopper section and the tip of the extruder.

The temperature at which the components are melt-kneaded can be set to a temperature equal to or higher than the highest of the melting points of the components mixed. Specifically, the temperature at which the melt kneading is performed is in a range of typically 180 to 320°C, preferably 230 to 300°C, and more preferably 235 to 280°C.

The ratio of reaction between the polyolefin (a) and the carbodiimide group-containing compound (b) can be evaluated by the following method.

From each of the polyolefin (a) having a group reactive with a carbodiimide group (reference) and a polymer composition containing a polyolefin having a carbodiimide group, a hot-pressed sheet is prepared, followed by measurement of an infrared absorption with an infrared absorption analyzer. With the obtained chart, an absorbance derived from a group reactive with a carbodiimide group in the polyolefin (a) is compared with a difference between the absorbance derived from a group reactive with a carbodiimide group in the polyolefin (a) and an absorbance derived from a group reactive with a carbodiimide group in the polymer composition. The ratio of reaction can be calculated using the following expression (2). When maleic anhydride is used as the group reactive with a carbodiimide group, an absorbance around 1790 cm$^{-1}$ can be used.

$$\text{Ratio of reaction (\%) = (X/Y)} \times 100 \cdots (2)$$

> X: a difference between an absorbance derived from a group reactive with a carbodiimide group in the polyolefin (a) and an absorbance derived from a group reactive with a carbodiimide group in the polymer composition
> Y: an absorbance derived from a group reactive with a carbodiimide group in the polyolefin (a)

The ratio of reaction determined by the above-described method for the polymer composition (B) is in a range of typically 40 to 100%, preferably 60 to 100%, and more preferably 80 to 100%.

<Requirement (ii)>

Carbodiimide groups are contained in an amount of 0.1 to 50 mmol per 100 g of the polymer composition (B).

The polymer composition (B) according to the present invention contains a carbodiimide-modified polyolefin having a carbodiimide group, and the amount of the carbodiimide group is 0.1 to 50 mmol, preferably 0.2 to 40 mmol, and more preferably 0.5 to 30 mmol, per 100 g of the polymer composition (B). It is preferred that the amount of the carbodiimide group in the polymer composition (B) be in the above-described range because the polymer composition (B) is excellent in adhesive strength with the metal material (A) at room temperature and in a high-temperature environment (for example, 100°C), and crosslinking of the polyolefin (a) can be suppressed.

The content of the carbodiimide group in the polymer composition can be measured by, for example, $^{13}$C-NMR, IR or titration, and can be known as a carbodiimide group equivalent. A peak attributed to a carbodiimide group can be observed at 130 to 142 ppm in the case of $^{13}$C-NMR, and at 2130 to 2140 cm$^{-1}$ in the case of IR. The $^{13}$C-NMR measurement is performed by, for example, the measurement method described above for the carbodiimide group-containing content in the carbodiimide group-containing compound (b) and a measurement method described in Examples.

The polymer composition (B) according to the present invention is produced by reaction of a carbodiimide group of polycarbodiimide (NCN) with the compound (m) having a group reactive with a carbodiimide group. The carbodiimide group is consumed to some extent during the reaction, and carbodiimide group residues connected to the polyolefin group on the same molecular chain contribute to adhesiveness with a polymer ($\alpha$) having a NH group at a molecular terminal. If the content of the carbodiimide group exceeds the above-described range, an excessive amount of free carbodiimide groups are present with respect to the polyolefin (a) having a group reactive with a carbodiimide group, resulting in deterioration of adhesion performance with the metal material (A) and moldability.

The carbodiimide group is changed into a urea group by absorption of water, but the urea group also exhibits high reactivity with a semi-aromatic polyamide. Therefore, the polymer composition (B) according to the present invention may contain a polyolefin in which the carbodiimide group is converted into a urea group by, for example, water in the air, and such a configuration is one of preferred aspects of the present invention.

Preferably, the polymer composition (B) further contains a high-density polymer (c) having a density of 0.890 g/cm$^3$ or more.

The density of the polymer composition (B) is preferably 0.900 g/cm$^3$ or more.

It is desirable that the content of a low-density polymer (d) having a density of less than 0.890 g/cm$^3$, in the polymer composition (B), be 10% by mass or less.

The content of the high-density polymer (c) in the polymer composition (B) is preferably 60% by mass to 99% by mass.

The high-density polymer (c) preferably contains a polymer (c-1) having no polar functional group, and preferably contains a polymer (c-2) having a polar functional group.

Examples of the polymer (c-2) having a polar functional group include polymers exemplified in "Other layers" described later (except for polyolefins), and polymers in which a monomer such as a polar group (for example, a carbonyl group, a hydroxyl group or an ether bond group) used for a "polyolefin layer (Z-1)" is copolymerized with a polyolefin.

Examples of the polymer (c-1) having no polar functional group include polyolefins, which include polymers (1) to (12) listed as "specific examples of polyolefin" described later.

To the polymer composition (B) according to the present invention, known additives used in the field of polyolefin, for example, a tackifier, a process stabilizer, a heat stabilizer, an anti-heat aging agent and a filler can be added.

In the present invention, a tackifier is preferably blended for imparting stickiness. Examples of the tackifier include rosin derivatives, terpene rosins, petroleum resins, and hydrogenated products thereof, with hydrogenated terpene resins and hydrogenated petroleum resins being preferred. The tackifier is not limited as long as the effects of the present invention are exhibited. For example, the tackifier is preferably blended in a ratio of 0 to 30% by mass relative to 100% by mass of the polymer composition (B).

<<Metal-resin composite>>

The metal-resin composite of the present invention comprises the layer (AL) composed of the metal material (A), and the layer (BL) composed of the polymer composition (B).

In a certain embodiment of the present invention, the metal-resin composite has higher adhesive strength at 100°C between the metal material (A) and the polymer composition (B) than the adhesive strength at 23°C.

The metal-resin composite of the present invention may comprise, in addition to the layer (AL) composed of the metal material (A), and the layer (BL) composed of the polymer composition (B), another layer (X) on a surface of the layer (BL) composed of the polymer composition (B).

<Other layer (X)>

The other layer (X) which may form the metal-resin composite according to the present invention is a layer differing from the layer (BL) of the polymer composition (B). The polymer forming the other layer (X) is not limited as long as the effects of the present invention are exhibited, and examples thereof include polyolefin, polyketone, polyester, aliphatic polyamide, semi-aromatic polyamide, liquid crystal polymers, polysaccharide derivatives, polyether, polyurethane, ethylene/vinyl alcohol copolymers, polyvinyl alcohol, ionomers, ethylene-acrylic acid copolymers, ethylene vinyl acetate copolymers, polycarbonate, polyphenylene sulfide, polyphenylene ether, polyacetal, polysulfone, polyarylate, polyaryl ether ketone, polyimide, and modified fluororesin. The polymers may be used alone, or two or more thereof may be used. The polymer may have an acidic functional group such as a carbonyl group, a carboxy group or a sulfone group.

(Polyolefin layer (Z-1))

Having a polyolefin layer (Z-1) as a layer (Z) forming the metal-resin composite according to the present invention is one of preferred examples.

The polyolefin layer (Z-1) contains a polyolefin. Examples of the polyolefin include homopolymers and copolymers of an $\alpha$-olefin having 2 to 20 carbon atoms. The polyolefins may be used alone, or two or more thereof may be used. Specific examples of the $\alpha$-olefin include ethylene, propylene, 1-butene, 4-methyl-1-pentene, 1-hexene, and 1-octene. In the polyolefin, a monomer other than an $\alpha$-olefin may be copolymerized in a small amount of, for example, 10 mol% or less. The other monomer is not limited, and examples thereof include monomers having a polar group (for example, a carbonyl group, a hydroxide group or an ether bond group) and a polymerizable carbon-carbon double bond in the molecule.

Specific examples of the polyolefin include homopolymers and copolymers such as

(1) an ethylene homopolymer (which may be produced either by a low-pressure method or by a high-pressure method),

(2) an ethylene/propylene copolymer of 99 to 80 mol% of ethylene and 1 to 20 mol% of propylene, preferably an ethylene/propylene copolymer of 95 to 85 mol% of ethylene and 5 to 15 mol% of propylene,

(3) an ethylene/1-butene copolymer of 99 to 80 mol% of ethylene and 1 to 20 mol% of 1-butene, preferably an ethylene/1-butene copolymer of 95 to 85 mol% of ethylene and 5 to 15 mol% of 1-butene,

(4) an ethylene/1-butene copolymer of 99 to 80 mol% of ethylene and 1 to 20 mol% of 1-octene, preferably an ethylene/1-octene copolymer of 97 to 85 mol% of ethylene and 3 to 15 mol% of 1-octene,

(5) an ethylene-based copolymer such as a copolymer of ethylene and 10 mol% or less of another $\alpha$-olefin (excluding propylene, 1-butene and 1-octene) or a vinyl monomer (for example, vinyl acetate or ethyl acrylate),

(6) a propylene homopolymer,

(7) a random copolymer of propylene and 30 mol% or less of another $\alpha$-olefin, preferably a random copolymer of propylene and 20 mol% or less of another α-olefin,
(8) a block copolymer of propylene and 40 mol% or less of another α-olefin,
(9) a 1-butene homopolymer,
(10) a random copolymer of 1-butene and 10 mol% or less of another α-olefin,
(11) a 4-methyl-1-pentene homopolymer, and
(12) a random copolymer of 4-methyl-1-pentene and 20 mol% or less of another α-olefin.

Of these, preferred are homopolymers and copolymers such as

(2) an ethylene/propylene copolymer of 95 to 85 mol% of ethylene and 5 to 15 mol% of propylene,
(3) an ethylene/1-butene copolymer of 95 to 85 mol% of ethylene and 5 to 15 mol% of 1-butene,
(4) an ethylene/1-octene copolymer of 97 to 85 mol% of ethylene and 3 to 15 mol% of 1-octene,
(5) an ethylene-based copolymer such as a copolymer of ethylene and 10 mol% or less of another α-olefin (excluding propylene, 1-butene and 1-octene) or a vinyl monomer (for example, vinyl acetate or ethyl acrylate),
(6) a propylene homopolymer,
(7) a random copolymer of propylene and 20 mol% or less of another α-olefin, and
(8) a block copolymer of propylene and 40 mol% or less of another α-olefin.

<Configuration of laminate>

The metal-resin composite of the present invention may be a laminate. The laminate of the present invention comprises the layer (AL) composed of the metal material (A), and the layer (BL) composed of the polymer composition (B), which is at least partially in contact with the layer (AL) composed of the metal material (A). A first laminate is preferably a laminate in which the layer (Z), preferably the polyolefin layer (Z-1), and the layer (AL) are laminated with the layer (BL) interposed therebetween, and more preferably any of a laminate having a three-type three-layer structure of Z/BL/AL and a laminate having a three-type five-layer structure of AL/BL/Z/BL/AL or Z/BL/AL/BL/Z, where the word "layer" is omitted, but the first laminate is not limited thereto.

The thickness of the layer (AL) composed of the metal material (A) is typically 0.005 to 3 mm, and preferably 0.01 to 0.5 mm. The thickness of the layer (BL) composed of the polymer composition (B) is typically 0.005 to 3 mm, and preferably 0.01 to 0.5 mm. The thickness of the layer (Z) is typically 0.01 to 100 mm, and preferably 0.03 to 2 mm. The thickness of the laminate having a three-type three-layer structure of X/Y/Z is typically 0.02 to 106 mm, and preferably 0.05 to 3 mm. When there are a plurality of layers (AL) composed of the metal material (A), a plurality of layers (BL) composed of the polymer composition (B) and a plurality of layers (Z), it is possible to refer to the above for the thickness of each layer.

<<Method for producing metal-resin composite>>

As a method for producing the metal-resin composite of the present invention, any of various known methods can be used, and one of the production methods is a method comprising the steps of bringing a molten product of the polymer composition (B) into contact with a surface of the layer (AL) composed of the metal material (A), and cooling the layer (BL) composed of the molten product of the polymer composition (B) brought into contact with the surface of the layer (AL) composed of the metal material (A). An aspect of the method is, for example, a method in which the polymer composition (B) is layered in advance, specifically, the layer composed of the metal material (A) and the layer (BL) composed of the polymer composition (B) and obtained by molding in advance are bonded to each other, and the layer (BL) composed of the polymer composition (B) is then melted by heating, and then cooled to produce a metal-resin composite.

As the method for contact of a molten product of the polymer composition (B), in the method for producing the metal-resin composite of the present invention, various known methods can be used. Specific examples thereof include a method in which a molten product of the polymer composition (B) is injection-molded on a surface of the layer (AL) composed of the metal material (A), a method in which the layer (AL) composed of the metal material (A) is mounted in a mold, and the mold is then closed, followed by injection of the polymer composition (B), a method in which the polymer composition (B) is extruded to cover a surface of the layer (AL) composed of the metal material (A), and a method in which a film of the polymer composition (B) is heat-pressed to a surface of the layer (AL) composed of the metal material (A).

<Applications of metal-resin composite>

The metal-resin composite of the present invention can be used for, for example, food packaging materials such as food containers and beverage containers, chemical packaging materials such as cosmetic bottles and shampoo bottles, industrial materials such as automobile parts, fuel pipes, gas pipes, hot water pipes, ink tubes and liquid transportation tubes, and building materials such as decorative sheets, without limitation.

Examples

Hereinafter, the present invention will be more specifically described by way of Examples and Comparative Examples, but these Examples should not be construed as any limitation to the present invention without departing the gist of the present invention.

[Various methods for measurement]

In Examples, measurements were performed according to the following methods.

[Melt flow rate (MFR)]

Measurement was performed at 230°C under a load of 2.16 kg according to ASTM D1238.

[Density]

The density was measured according to JIS K7112.

[Number-average molecular weight of carbodiimide group-containing compound]

The number-average molecular weight of the carbodiimide group-containing compound was measured by GPC (gel permeation chromatography) at a column temperature of 40°C using a tetrahydrofuran solvent (mobile phase) (in terms of polystyrene, Mw: weight-average molecular weight, Mn: number-average molecular weight). As the standard polystyrene, Polystyrene PS-1 manufactured by Agilent Technologies, Inc. (formerly Polymer Laboratories, Ltd.) was used when the molecular weight met $580 \leq Mw \leq 7 \times 10^6$.

[Carbodiimide group content]

The carbodiimide group content was calculated from a charged amount.

[Graft amount of maleic anhydride]

The graft amount of maleic anhydride was measured in the following manner by FT-IR.
In the FT-IR measurement, a heat-pressed sheet was prepared from the sample under conditions of 250°C for 3 minutes, and an infrared absorption spectrum around $1790\ cm^{-1}$ was then measured by a transmission method using an infrared spectrophotometer (model FT-IR410 manufactured by JASCO Corporation). For the measurement conditions, the resolution was $2\ cm^{-1}$, and the number of scans was 32.

[Ratio of reaction between polyolefin (a) and carbodiimide group-containing compound (b) (%)]

The ratio of reaction (%) was calculated from the above expression (2) using the graft amounts of maleic anhydride measured with respect to the adhesive polymer composition and the polyolefin (a) (the absorbance ($1790\ cm^{-1}$) derived from maleic anhydride in the polymer composition and the absorbance derived from maleic anhydride in the polyolefin (a)) by FT-IR.

[Metal material]

In Examples and Comparative Examples, the following an aluminum sheet was used.

An aluminum sheet having a thickness of 200 $\mu$m and a width of 15 mm
[Resin material]
In Comparative Examples, the following resins were used.
EVOH having a thickness of 200 $\mu$m and a width of 15 mm (EVAL F101A manufactured by Kuraray Co., Ltd.)
Polyamide 6 having a thickness of 200 $\mu$m and a width of 15 mm (AMILAN CM1021XF manufactured by Toray Industries, Inc.)
PET having a thickness of 200 $\mu$m and a width of 15 mm (Mitsui PET J125 manufactured by Mitsui Chemicals, Inc.)

[Production of resin composite]

A metal material or a resin material and a polymer composition were stacked in a layer configuration of metal material or resin material/resin composition/metal material or resin material, and a press molding machine set at a temperature of 200°C was then applied under conditions of preheating for 6 minutes, pressurization at a pressure of 3.9 MPa for 4 minutes and cooling for 3 minutes to produce a resin composite (laminate) having a three-layer structure.

[Adhesive strength of resin composite]

The obtained resin composite was cut into a width of 15 mm, and the adhesive strength (unit: N/15 mm) at an interface between the material and a polymer composition (containing, for example, carbodiimide-modified polypropylene) was measured in an atmosphere at a room temperature of 23°C and an atmosphere at 100°C by a 180° peeling method. The obtained resin composite was subjected to retort treatment in hot water at 121°C for 30 minutes, and the adhesive strength in an atmosphere at room temperature was measured in the same manner as described above. The crosshead speed was 300 mm/min.

[Polyolefins used]

The polyolefins used in Examples and Comparative Examples are shown below. Unless otherwise specified, all of the polyolefins used were commercially available products.

(1) PP-1: Polypropylene (random PP, MFR: 7 g/10 min, density: 0.910 $g/cm^3$, manufactured by Prime Polymer Co., Ltd.)
(2) MAH-PP-2: maleic anhydride-modified polypropylene (MFR: 6 g/10 min, density: 0.890 $g/cm^3$, graft amount of maleic anhydride: 0.15%, manufactured by Mitsui Chemicals, Inc.)

[Example 1]

<Production of polyolefin (a) having group reactive with carbodiimide group>

100 parts by weight of PP-1, 1 part by weight of maleic anhydride (manufactured by Wako Pure Chemical Industries, Ltd., hereinafter abbreviated as MAH) and 0.25 parts by weight of 2,5-dimethyl-2,5-bis(tert-butylperoxy) hexyne-3 (manufactured by NOF CORPORATION, trade name: PERHEXYNE (registered trademark) 25B) were mixed, and extruded at a cylinder temperature of 220°C, a screw rotation speed of 200 rpm and a discharge rate of 80 g/min using a twin-screw kneader (TEX-30 manufactured by The Japan Steel Works, Ltd., L/D: 40, with a vacuum vent), thereby obtaining maleic acid-modified polypropylene (hereinafter, abbreviated as MAH-PP-1). The density of MAH-PP-1 was 0.915 $g/cm^3$.
The obtained MAH-PP-1 was dissolved in xylene, and the obtained xylene solution was poured to acetone to re-precipitate and purify the MAH-PP-1. The graft amount of maleic anhydride was 0.7% by weight as measured by FT-IR.

<Production of polymer composition (B-1)>

90 parts by weight of PP-1, 10 parts by weight of MAH-PP-1 produced as described above, and 1.7 parts by weight of a carbodiimide group-containing compound (manufactured by Nisshinbo Chemical Inc., trade name: CARBODILITE (registered trademark) HMV-8CA, carbodiimide group equivalent: 278, number-average molecular weight: 2,100, the number of carbodiimide groups in one molecule is 9) were mixed, and extruded at a cylinder temperature of 250°C, a screw rotation speed of 200 rpm and a discharge rate of 80 g/min using a twin-screw kneader (TEX-30 manufactured by The Japan Steel Works, Ltd., L/D = 40, with a vacuum vent), thereby producing a polymer composition (B-1) containing carbodiimide-modified polypropylene (CDI-PP-1).
The obtained olefin resin composition (B-1) had an MFR (230°C, 2.16 kg load) of 3 g/10 min and a density of 0.910 $g/cm^3$. The FT-IR analysis showed that a peak for maleic anhydride (1790 $cm^{-1}$) disappeared from CDI-PP-1, which means that the ratio between the difference (X) between the absorbance derived from a group reactive with a carbodiimide group in MAH-PP-1 and the absorbance derived from a group reactive with a carbodiimide group in CDI-PP-1 and the absorbance (Y) derived from a group reactive with a carbodiimide group in MAH-PP-1 was 1, and therefore the ratio of reaction between MAH-PP-1 and the carbodiimide group-containing compound was 100%. The carbodiimide group content was 6.01 mmol per 100 g of the polymer composition (B-1) (calculated from the charged amount). The polymer composition (B-1) contained 88.5% by mass of PP-1 and 11.5% by mass of carbodiimide-modified polypropylene (CDI-PP-1). The density of carbodiimide-modified polypropylene (CDI-PP-1) was 0.909 $g/cm^3$.

<Production of metal-resin composite and measurement of adhesive strength>

A metal-resin composite was produced by the above-described method using the obtained polymer composition (B-1), and the adhesive strength of the metal-resin composite was then measured by the above-described method.

The results are shown in Table 1.

[Example 2]

Except that the carbodiimide group content was changed to 0.61 mmol per 100 g of the polymer composition (B-2) (calculated from the charged amount) by adjusting the amount of the carbodiimide group-containing compound added, the same procedure as in Example 1 was carried out to obtain a resin composite. The results are shown in Table 1. The polymer composition (B-2) contained 98.8% by mass of PP-1 and 1.2% by mass of carbodiimide-modified polypropylene (CDI-PP-2). The density of the polymer composition (B-2) was 0.910 g/cm$^3$. The density of carbodiimide-modified polypropylene (CDI-PP-2) was 0.909 g/cm$^3$.

[Example 3]

Except that the carbodiimide group content was changed to 11.8 mmol per 100 g of the polymer composition (B-3) (calculated from the charged amount) by adjusting the amount of the carbodiimide group-containing compound added, the same procedure as in Example 1 was carried out to obtain a resin composite. The results are shown in Table 1. The polymer composition (B-3) contained 77.5% by mass of PP-1 and 22.5% by mass of carbodiimide-modified polypropylene (CDI-PP-3). The density of the polymer composition (B-3) was 0.910 g/cm$^3$. The density of carbodiimide-modified polypropylene (CDI-PP-3) was 0.909 g/cm$^3$.

[Comparative Example 1]

Except that MAH-PP-2 was used instead of the polymer composition (B-1) used in Example 1, the same procedure as in Example 1 was carried out to obtain a resin composite. The results are shown in Table 1.

[Comparative Example 2]

Except that EVOH was used as an adherend, the same procedure as in Example 1 was carried out to obtain a resin composite. The results are shown in Table 1.

[Comparative Example 3]

Except that polyamide 6 was used as an adherend, the same procedure as in Example 1 was carried out to obtain a resin composite. The results are shown in Table 1.

[Comparative Example 4]

Except that PET was used as an adherend, the same procedure as in Example 1 was carried out to obtain a resin composite. The results are shown in Table 1.

[Table 1]

| Example | | | Example 1 | Example 2 | Example 3 | Comparative Example 1 | Comparative Example 2 | Comparative Example 3 | Comparative Example 4 |
|---|---|---|---|---|---|---|---|---|---|
| Adherend | | | Aluminum sheet | Aluminum sheet | Aluminum sheet | Aluminum sheet | EVOH (EVAL F101A) | Polyamide 6 (AMILAN CM1021XF) | PET (Mitsui PET J125) |
| Adhesive strength | Room temperature | N/15mm | 133 | 162 | 230 | 100 | 45 | 45 | 34 |
| | 100°C | N/15mm | 287 | 204 | 322 | 85 | 15 | 30 | 8 |
| Carbodiimide group content | | mmol/100g | 6.01 | 0.61 | 11.8 | | 6.01 | 6.01 | 6.01 |

As shown in Table 1, the metal-resin composites with a polymer composition which contains carbodiimide-modified polypropylene and in which the content of carbodiimide groups is in a predetermined range, which were obtained in Examples 1 to 3, were excellent in adhesive strength at room temperature and adhesive strength at a high temperature of 100°C, and had higher adhesive strength at a high temperature of 100°C than the adhesive strength at room temperature. In contrast, the metal-resin composite with a polymer composition free of a carbodiimide group, which was obtained in Comparative Example 1, has low adhesive strength at a high temperature of 100°C.

Industrial Applicability

According to the present invention, by using a carbodiimide-modified polyolefin capable of adhering many types of resins, a lightweight metal-resin composite having sufficient adhesive strength between a metal material and a polymer composition can be provided.

The metal-resin composite of the present invention can be used for various applications such as food packaging materials such as food containers and beverage containers, chemical packaging materials such as cosmetic bottles and shampoo bottles, industrial packaging materials such as semiconductor trays, industrial materials such as automobile parts, fuel pipes, gas pipes, hot water pipes, ink tubes and liquid transportation tubes, and building materials such as decorative sheets.

**Claims**

1. A metal-resin composite comprising a layer (AL) composed of a metal material (A), and a layer (BL) composed of a polymer composition (B) that satisfies the following requirements (i) and (ii):

   (i) a carbodiimide-modified polyolefin formed by reaction of a polyolefin (a) having a group reactive with a carbodiimide group and a carbodiimide group-containing compound (b) is contained; and
   (ii) carbodiimide groups are contained in an amount of 0.1 to 50 mmol per 100 g of the polymer composition (B).

2. The metal-resin composite according to claim 1, wherein a content of the carbodiimide-modified polyolefin in the polymer composition (B) is 1% by mass to 40% by mass.

3. The metal-resin composite according to claim 1, wherein the polymer composition (B) further contains a high-density polymer (c) having a density of 0.890 g/cm$^3$ or more.

4. The metal-resin composite according to claim 3, wherein a content of the high-density polymer (c) in the polymer composition (B) is 60% by mass to 99% by mass.

5. The metal-resin composite according to claim 1, wherein a content of a low-density polymer (d) having a density of less than 0.890 g/cm$^3$, in the polymer composition (B), is 10% by mass or less.

6. The metal-resin composite according to claim 1, wherein a density of the polymer composition (B) is 0.900 g/cm$^3$ or more.

7. The metal-resin composite according to claim 1, wherein the layer (AL) and the layer (BL) are at least partially heat-sealed.

8. The metal-resin composite according to claim 7, wherein the layer (AL) and the layer (BL) are at least partially in contact with each other.

9. The metal-resin composite according to claim 7 or claim 8, wherein adhesive strength at 100°C between the layer (AL) and the layer (BL) is higher than the adhesive strength at room temperature.

10. The metal-resin composite according to claim 3, wherein the high-density polymer (c) contains a polymer (c-1) having no polar functional group.

11. The metal-resin composite according to claim 3, wherein the high-density polymer (c) contains a polymer (c-2) having a polar functional group.

12. The metal-resin composite according to claim 1, wherein the number of carbodiimide groups in one molecule of the carbodiimide group-containing compound (b) is 5 or more.

13. The metal-resin composite according to claim 1, wherein the metal material (A) is aluminum.

14. A method for producing the metal-resin composite according to claim 7 or claim 8, comprising the steps of bringing a molten product of a polymer composition (B) into contact with a surface of a layer (AL) composed of a metal material (A), and cooling a molten product of the layer (BL) composed of the polymer composition (B) brought into contact with the surface of the layer (AL) composed of the metal material (A), the polymer composition (B) satisfying the following requirements (i) and (ii):

(i) a carbodiimide-modified polyolefin formed by reaction of a polyolefin (a) having a group reactive with a carbodiimide group and a carbodiimide group-containing compound (b) is contained; and
(ii) carbodiimide groups are contained in an amount of 0.1 to 50 mmol per 100 g of the polymer composition (B).

## INTERNATIONAL SEARCH REPORT

| | International application No. |
|---|---|
| | **PCT/JP2024/013016** |

**A. CLASSIFICATION OF SUBJECT MATTER**

*B32B 15/08*(2006.01)i; *B32B 27/32*(2006.01)i; *C08F 8/30*(2006.01)i; *C09J 123/26*(2006.01)i
FI:   B32B15/08 Q; C08F8/30; C09J123/26; B32B27/32 Z

According to International Patent Classification (IPC) or to both national classification and IPC

**B. FIELDS SEARCHED**

Minimum documentation searched (classification system followed by classification symbols)

B32B15/08; B32B27/32; C08F8/30; C09J123/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-127843 A (MITSUI CHEMICALS, INC.) 01 September 2022 (2022-09-01)<br>claims, paragraphs [0068], [0105]-[0136], examples | 1-14 |
| X | JP 2019-111790 A (DIC CORPORATION) 11 July 2019 (2019-07-11)<br>claims, paragraphs [0109], [0116], [0139]-[0173], examples | 1, 5-9, 12-14 |
| X | JP 2019-137853 A (FUJIMORI KOGYO CO., LTD.) 22 August 2019 (2019-08-22)<br>claims, paragraphs [0043], [0062], [0063]-[0084], examples | 1, 5-9, 12-14 |
| A | WO 2007/040261 A1 (MITSUI CHEMICALS, INC.) 12 April 2007 (2007-04-12)<br>claims, examples | 1-14 |
| A | JP 2005-307157 A (MITSUI CHEMICALS, INC.) 04 November 2005 (2005-11-04)<br>claims, examples | 1-14 |
| A | WO 2017/104731 A1 (MITSUI CHEMICALS, INC.) 22 June 2017 (2017-06-22)<br>claims, examples | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/013016**

| Patent document cited in search report | | | Publication date (day/month/year) | Patent family member(s) | | | Publication date (day/month/year) |
|---|---|---|---|---|---|---|---|
| JP | 2022-127843 | A | 01 September 2022 | (Family: none) | | | |
| JP | 2019-111790 | A | 11 July 2019 | (Family: none) | | | |
| JP | 2019-137853 | A | 22 August 2019 | JP | 2023-160910 | A | |
| | | | | WO | 2019/150191 | A1 | |
| | | | | KR | 10-2020-0106182 | A | |
| | | | | CN | 111683812 | A | |
| WO | 2007/040261 | A1 | 12 April 2007 | US | 2009/0110945 | A1 | |
| | | | | claims, examples | | | |
| | | | | EP | 1942168 | A1 | |
| | | | | CN | 101278026 | A | |
| | | | | KR | 10-2008-0055982 | A | |
| JP | 2005-307157 | A | 04 November 2005 | US | 2007/0173603 | A1 | |
| | | | | claims, examples | | | |
| | | | | WO | 2005/097840 | A1 | |
| | | | | EP | 1728803 | A1 | |
| | | | | KR | 10-2007-0008608 | A | |
| | | | | CN | 1938339 | A | |
| | | | | TW | 200604231 | A | |
| WO | 2017/104731 | A1 | 22 June 2017 | US | 2018/0334593 | A1 | |
| | | | | claims, examples | | | |
| | | | | EP | 3392035 | A1 | |
| | | | | KR | 10-2018-0072791 | A | |
| | | | | CN | 108290392 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 50004144 A